# EUROPÄISCHE PATENTSCHRIFT

(11) **EP 1 988 212 B1**
(45) Veröffentlichungstag und Bekanntmachung des Hinweises auf die Patenterteilung: **15.04.2015**
(21) Anmeldenummer: 07023641.9
(22) Anmeldetag: 06.12.2007
(51) Int. Cl.: D21G 1/02, D21F 1/40, F16C 13/00, F16C 13/02, D21G 1/00, B65H 23/025

(54) **Biegewalzenanordnung**
Roll bending assembly
Agencement de centrage de cylindre

(30) Priorität: 08.12.2006 DE 102006057907
(43) Veröffentlichungstag der Anmeldung: 05.11.2008
(73) Patentinhaber: INOMETA GmbH & Co. KG, 32052 Herford (DE)
(72) Erfinder: Von Hülsen, Ulrich, Dr., 32105 Bad Salzuflen (DE); Neumann, Olaf, 33607 Bielefeld (DE); Tappe,, 32052 Herford (DE)
(74) Vertreter: Bittner, Thomas L.

(56) Entgegenhaltungen:
- DE-A1- 2 832 457
- DE-A1-102004 045 407
- US-A- 3 676 909

## Beschreibung

### Technisches Gebiet

Die Erfindung betrifft eine Biegewalzenanordnung, umfassend einen Außenmantel und einen Innenmantel, die im mittleren Bereich ihrer Längserstreckung durch einen Abstützkörper in radialer Richtung aufeinander abgestützt, gemeinsam rotierbar und auf voneinander unabhängigen, stirnseitigen Lagerzapfengelagert sind, wobei Mittel vorgesehen sind, die es gestatten, die Lagerzapfen des Innenmantels relativ zu den Lagerzapfen des Außenmantels in radialer Richtung zu verschieben.

### Stand der Technik

Eine solche Biegewalzenanordnung ist aus der DE 10 2004 045 407 A1 bekannt. Der Außen- und der Innenmantel sind dabei im mittleren Bereich ihrer Längserstreckung mittels eines Ringvorsprunges aufeinander abgestützt, im übrigen durch einen Spalt von einander getrennt und an den stirnseitigen Enden unabhängig voneinander gelagert und mittels der Lager positionsverstellbar in Stützkonstruktionen abgestützt. Dies ermöglicht es, die Enden gegeneinander in radialer Richtung zu verschieben, um eine mittige, definierte Durchbiegung des Außernantels einzustellen und die Biegewalze z.B. in einem Breitstreckwerk zu verwenden, um eine darüber laufende, flexible Warenbahn in Querrichtung zu strecken. Die Größe der Durchbiegung des Außenmantels und das Anwendungsspektrum solcher Biegewalzen sind allerdings begrenzt. Es entstand daher der Wunsch größere Werte der Durchbiegung einstellen zu können. Das Einstellen einer bestimmten Durchbiegung ist außerdem mit erheblichem Aufwand verbunden und dadurch wenig befriedigend. Eine andere Anwendung bezieht sich darauf, eine zusätzliche Abstützung im mittleren Bereich einer auf Biegung beanspruchten Walze zur Verfügung zu haben, um das Auftreten einer Durchbiegung zu verhindern bzw. zu kompensieren. Derartige Anwendungen ergeben sich z.B. bei Andrückrollen, die beim Aufwickeln flexibler Warenbahnen zur Anwendung gelangen können.

Das Dokument DE 28 32 457 A1 beschreibt eine Biegewalzenanordnung nach dem Oberbegriff des Anspruchs 1.

Das Dokument US 3,676,909 A betrifft eine Walze mit einem röhrenförmigen Mantel und einer Welle in der Mitte des Walzenmantels. An den Enden der Welle ist jeweils ein Rollenlager zum Rotieren des Walzenmantels angeordnet.

### Darstellung der Erfindung

Der Erfindung liegt die Aufgabe zu Grunde, eine solche Vorrichtung derart weiter zu entwickeln, dass bei vereinfachter Einstellbarkeit der Durchbiegung größere Werte für die Durchbiegungen oder die Kompensation von Durchbiegungen erhalten werden können.

Diese Aufgabe wird erfindungsgemäß bei einer Biegewalzenanordnung nach dem Oberbegriff durch die kennzeichnenden Merkmale von Anspruch 1 gelöst. Auf vorteilhafte Weiterbildungen nehmen die Unteransprüche Bezug.

Bei der erfindungsgemäßen Biegewalzenanordnung ist es demgemäss vorgesehen, dass , dass die Mittel von dem Außenmantel radial umschlossen sind und zumindest eine erste Verstelleinrichtung für die radiale Verschiebung der Lagerzapfen des Innenmantels umfassen. Die Lagerzapfen des Außen- und des Innenmantels sind jeweils mit dem Außen- bzw. Innenmantel unverdrehbar verbunden, beispielsweise durch Flansche, und im Normalfall auf auf Wälz- oder Gleitlagern in einer Stützkonstruktion gelagert.

Durch die Anbringung der eine radiale Verschiebung der Achse des Innenmantels bewirkenden Mittel im Inneren des Außenmantels gelangen sie an einer statisch günstigeren Stelle als bisher zum Einsatz und sind daher wirkungsvoller als bisher gestaltbar. Außerdem erfordert die Montage keine besonderen Maßnahmen oder Hilfsmitel an äußeren oder sekundären Stützkontruktionen, sondern die Biegewalzenanordnung kann als in sich geschlossene Bauheinheit im Falle einer Beschädigung einfacher ausgetauscht werden als bisher.

Nach einer vorteilhaften Ausgestaltung ist es vorgesehen, dass der oder die in radialer Richtung wirksame Verstelleinrichtung mechanisch und/oder motorisch verstellbar ist bzw. sind. Falls an den beiden einander gegenüberliegenden Enden des Innenmantels Verstelleinrichtungen vorgesehen sind, gelangen diese paaarweise zur Anwendung mit der zweckmäßigen Maßgabe, dass eine parallele Verstellung beider Verstelleinrichtungen vorgesehen ist, um eine symmetrische Abstützwirkung des Außenmantels zu erzielen. Natürlich ist es bei entsprechendem Bedarf auch möglich eine unsymmetrische Verstellung vorzunehmen und die Verstelleinrichtungen zu diesem Zweck unsymmetrisch zu verstellen.

Die Einstellexzenter können motorisch verstellbar ausgebildet sein und eine elektrisch, hydraulisch oder pneumatisch betätigbare Antriebseinheit umfassen. Das Einstellen gestaltet sich bei einer solchen Ausführung ganz besonders einfach.

An den beiden Enden des Innenmantels sind erste Einstellexzenter mit jeweils einem exzentrisch zu den ersten Lagerzapfen aufgenommenen Stützlager für die Lagerzapfen des Innenmantels vorgesehen, und die ersten Einstellexzenter Bestandteile bilden von die Lagerzapfen zentrisch nach außen durchdringenden, ersten Einstellwellen, die in Umfangsrichtung verdrehbar sind. Die Exzentrizität hat bei dieser Bauform einen starren Wert und ist durch eine Relativverdrehung der ersten Einstellwelle an jede beliebige Umfangsstelle verlagerbar. In den meisten Anwendungsfällen kommt es darauf an, dass eine definierte Durchbiegung der Biegewalze nur in einer bestimmten Richtung vorhanden ist und dass sekundäre Auslenkungen in anderen Richtungen in Kauf genommen werden können. Dieser Forderung lässt sich mit einer solch einfachen Bauform mit hinreichender Genauigkeit entsprechen, wobei die Einfachheit der Einstellung der Durchbiegung in einer definierten Richtung von besonderer Bedeutung ist. Die jeweils gewünschte Größe der Durchbiegung in dieser Richtung kann durch einfaches Verdrehen der ersten Einstellwelle zwischen dem minimalen und dem maximalen Wert eingestellt und verändert werden. Der maximale Wert der Auslenkung wird im mittleren Bereich der Längserstreckung erzielt.

Für Anwendungsfälle, in denen sekundäre Auslenkungen der Biegewalzenanordnung in anderen Richtungen nicht in Kauf genommen werden können, hat es sich bei einer solchen Bauform bewährt, wenn zwischen den Stützlagern des Innenmantels und dem ersten Einstellexzenter jeweils ein in Umfangsrichtung verdrehbarer, zweiter Einstellexzenter vorgesehen ist und wenn die zweiten Einstellexzenter durch zweite Einstellwellen verdrehbar sind, die die ersten Einstellwellen zentrisch nach außen durchdringen. Die Biegewirksamkeiten des ersten und des zweiten Einstellexzenters überlagern sich dabei gegenseitig derart, dass die radiale Durchbiegung des Außenmantels auf eine einzige Umfangsrichtung konzentriert ist und an dieser Umfangsstelle durch gezielte Relativverdrehungen des ersten und des zweiten Einstellexzenters auf irgend einen benötigten Zwischenwert zwischen der Minimal- und der Maximalauslenkung der Biegewalze eingestellt werden kann. Das Anwendungsspektrum der Biegewalze ist dadurch erheblich erweitert, wobei sich der zusätzliche Vorteil ergibt, dass die Biegewalze bei Durchbiegungen des Außenmantels, die unterhalb des Maximalwertes liegen, in mechanischer Hinsicht entsprechend weniger belastet wird. Die Dauerhaltbarkeit wird dadurch unter Umständen erheblich verbessert und es ergibt sich ferner die Möglichkeit, während der Veränderung der Umlaufgeschwindigkeit der Beigewalze Resonanzfrequenzen zu vermeiden, indem die Exzentrizitäten geringfügig verstellt werden.

Dabei hat es sich als besonders vorteilhaft erwiesen, wenn auf den zweiten Einstellwellen Zahnräder unverdrehbar festgelegt sind, wenn die Zahnräder mit einer Innenverzahnung der zweiten Einstellexzenter in Eingriff stehen und wenn die zweiten Einstellexzenter durch die Zahnräder in Umfangsrichtung verdrehbar sind. Die zweiten Einstellexzenter können in dem ersten Einstellexzenter auf einem Gleitlager gelagert sein, da keine besonders häufigen und großen Relativverdrehungen benötigt werden. Außerdem ist der Platzbedarf in Radialer Richtung bei einem Gleitlager ganz besonders gering, was es gestattet, das eigentliche Traglager des Innenmantels entsprechend groß und robust zu gestalten. Dennoch kann mit einem Gleitlager eine für eine Zahnkranzübersetzung hinreichend große Genauigkeit der Führung in radialer Richtung erreicht werden.

Die Walzenmäntel können aus irgend einem einschlägig benutzten Werkstoff bestehen, beispielweise aus Metall, insbesondere aus Stahl oder einem Faserverbundstoff. Sie sind zweckmäßig, in Querrichtung betrachtet, symmetrisch aufgebaut und haben zweckmäßig in der Walzenmitte eine größere Härte als an den Enden, wobei die verschiedenen Härten gleichmäßig ineinander übergehen.

### Kurzbeschreibung der Zeichnung

Zwei beispielhafte Ausführungen der Erfindung sind in der beiliegenden Zeichnung hälftig und in Längsrichtung zum Teil aufgeschnitten dargestellt. Sie werden nachfolgend näher erläutert.

### Es zeigen:

Fig. 1 eine Bauform, bei der an den Enden der Biegewalzenanordnung jeweils nur ein einziger Einstellexzenter vorgesehen ist.

Fig. 2 eine Bauform, bei der an den Enden der Biegewalzenanordnung jeweils zwei ineinander gelagerte Einstellexzenter vorgesehen sind.

Fig. 3 und Fig. 3a zeigen eine Bauform, bei der für eine radiale Verschiebung des Innenmantels eine motorische Antriebseinheit vorgesehen ist. Die Biegewalzenanordnung nach den Figuren 3 und 3a fällt nicht unter die Ansprüche.

### Ausführung der Erfindung

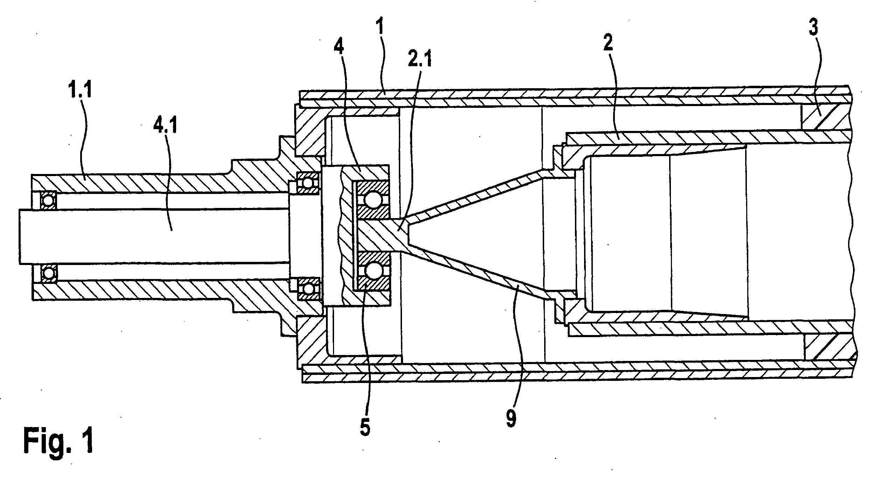

Die in Fig. 1 gezeigte Bauform zeigt ein Ende einer Biegewalzenanordnung, umfassend einen Außenmantel 1 und einen Innenmantel 2 aus Stahl, wobei auf dem Außenmantel 1 eine Armierung aus faserverstärktem Kunstharz oder eine Schleißschicht aus Gummi aufgebracht ist. Der Außenmantel kann auch insgesamt aus faserverstärktem Kunstharz bestehen. Der Außenmantel ist im mittleren Bereich seiner Längserstreckung durch einen ringförmigen Abstützkörper 3 in radialer Richtung auf dem Innenmantel unverdrehbar abgestützt, hier auf einem elastischen Gummiring. Statt dessen kann auch ein unnachgiebiger, metallischer Ring zur Anwendung gelangen, eine Vielzahl von gleichmäßig in Umfangsrichtung verteilten, unnachgiebigen oder elastischen Stützkörpern oder ein Ringvorsprung des Innen - oder Außenmantels. Der Außenmantel 1 und der Innenmantel 2 sind gemeinsam rotierbar und an beiden Enden auf voneinander unabhängigen, stirnseitigen Lagerzapfen 1.1, 2.1 verdrehbar gelagert. Die beidseitigen Lagerzapfen 2.1 des Innenmantels 2 bilden dabei die Enden von hohlkegeligen Glocken 9, die unverdrehbar mit den Enden des Innenmantels 2 verbunden sind.

Der Innenmantel 2 kann bis auf die Länge des Abstützkörpers 3 verkürzt und durch die sich unmittelbar anschließenden Glocken 9 mit den Lagerzapfen 2.1 verbunden sein. Hierdurch wird eine besonders steife, statische Ausbildung und Abstützung des Innenmantels 2 erreicht. Insgesamt ist der Innenmantel 2 stets erheblich biegesteifer gestaltet als der Außenmantel 1, um zu erreichen, dass der Außenmantel 1 im mittleren Bereich dauerhaft auf dem Innenmantel 2 abgestützt werden kann, um die gewünschte Auslenkung des mittleren Bereichs des Außenmantels 1 gezielt und dauerhaft einstellen zu können.

Zur Auslenkung des mittleren Bereichs des Außenmantels 1 sind an beiden Enden des Innenmantels 2 Mittel vorgesehen, die es gestatten, seine Lagerzapfen 2.1 parallel zu einander und relativ zu den Lagerzapfen 1.1 des Außenmantels 1 in einer radialen Richtung zu verschieben.

Dazu ist es gemäß Fig. 1 vorgesehen, dass in den ersten Lagerzapfen 1.1 des Außenmantels erste Einstellexzenter 4 mit jeweils einem exzentrisch zu den ersten Lagerzapfen 1.1 aufgenommenen Stützlager 5 für die Lagerzapfen 2.1 des Innenmantels vorgesehen sind und dass für eine Relativverdrehung der ersten Einstellexzenter 4 in Umfangsrichtung jeweils eine die Lagerzapfen 1.1 zentrisch nach außen durchdringende, erste Einstellwelle 4.1 vorgesehen ist. Die Anordnung ist im Bereich von beiden Enden der Biegewalzenanordnung übereinstimmend gestaltet.

Die Größe der Exzentriziät des ersten Einstellexenters 4 ist bei dieser Bauform auf einen festen Wert starr festgelegt, wobei die Richtung der Exzentrizität, bezogen auf die Umfangsrichtung, durch die jeweiligen Stellung der ersten Einstellwellen 4.1 bestimmt ist. In der Darstellung gemäß Fig. 1 zeigt die Auslenkung der Exzentrizität in der Blattebene nach oben. Am oberen Ende der Biegewalzenanordnung ergibt sich als Folge davon eine stärkere Komprimierung des ringförmigen Stützkörpers 3 als am unteren Ende, zugleich aber auch durchgehend eine konvexe Durchbiegung und Auslenkung des Außenmantels 1, die vor allem im mittleren Bereich seiner Längserstreckung deutlich in Erscheinung tritt. Die Richtung der Durchbiegung ist von der Stellung der Einstellwelle 4.1 abhängig und bleibt bei umlaufender Biegewalzenanordnung erhalten. Sie kann durch Relativverdrehen der ersten Einstellwelle 4.1 aus der Ebene der Zeichnung heraus verlagert werden.

Bei dem in Fig. 1 gezeigten Ausführungsbeispiel kann die Auslenkung der Biegewalzenanordnung, die ihren Maximalwert im mittleren Bereich der Längserstreckung erzielt und mit D bezeichnet ist, dazu benutzt werden, eine parallel zur Blattebene von unten nach oben über die Walzenanordnung laufende, flexible Warenbahn in Querrichtung zu strecken.

Der Grad der Streckung hängt maßgeblich von der Größe der Exzentriziät des ersten Einstellexzenters 4 ab, vom Durchmesser des Außenmantels 1 sowie von der Griffigkeit und Art der Oberflächenbeschichtung des Außenmantels 1. Besonders gute Werte werden unter Verwendung von Oberflächenbeschichtungen aus Weichgummi erzielt.

Bei der Bauform nach Fig. 1 ist die Exzentrizität des ersten Einstellexzenters starr festgelegt und während der bestimmungsgemäßen Verwendung nicht veränderbar. Es ist lediglich möglich, die Einstellwelle 4.1 so um ihre Achse zu verdrehen, dass der Maximalwert der Exzentrizität in eine von der Laufrichtung der Warenbahn bzw. Blattebene abweichende Richtung zeigt, mit der Folge, dass sich parallel zur Laufrichtung der Warenbahn eine entsprechend reduzierte Wirkung in Querrichtung ergibt. Dabei müssen aber in Abhängigkeit von der jeweiligen Relativerdrehung der ersten Einstellwellen 4.1 Sekundärauslenkungen in anderen Richtungen in Kauf genommen werden, die häufig nicht erwünscht oder technisch störend sind.

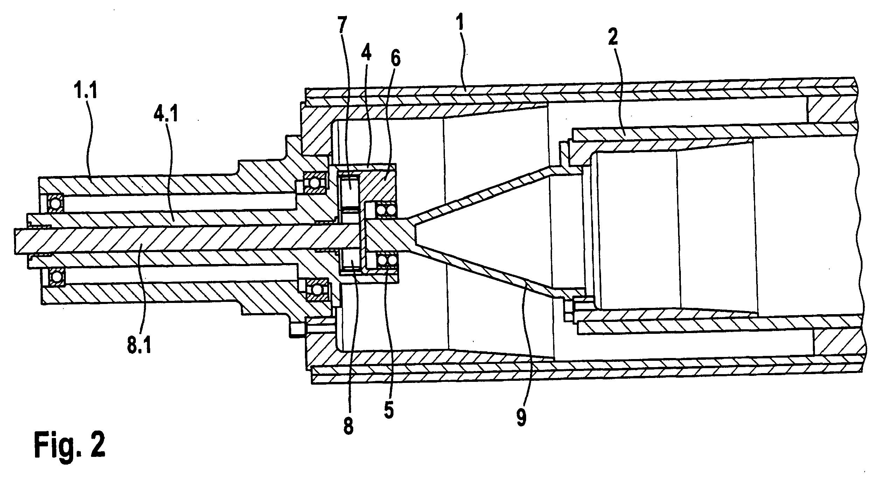

Diese Probleme werden bei der Bauform nach Fig. 2 überwunden, bei der es vorgesehen ist, dass zwischen den Stützlagern 5 und den ersten Einstellexzentern 4 jeweils ein in Umfangsrichtung relativ verdrehbarer, zweiter Einstellexzenter 6 vorgesehen ist, wobei die zweiten Einstellexzenter 6 durch zweite Einstellwellen 8.1 relativ verdrehbar sind, die die ersten Einstellwellen 4.1 zentrisch nach außen durchdringen. Die Größe der Exzentrizität des Außenmantels 1 im mittleren Bereich ergibt sich dadurch als Resultierende aus den beiden gegeneinander verdrehbaren Exzentrizitäten der ersten und zweiten Einstellexzenter 4, 6 in Bezug zu einander. Sie kann daher bei dieser Bauform zwischen dem Wert Null und dem Maximalwert stufenlos verändert und außerdem auf eine bestimmte Richtung konzentriert werden. Die technische Verwendbarkeit dadurch wesentlich verbessert. Außerdem ist es in vielen Fällen nicht erforderlich, mit der maximalen Durchbiegung bzw. Auslenkung des Außenmantels 1 im mittleren Bereich seiner Längserstreckung zu arbeiten. Die mechanische Beanspruchung des zu seiner Herstellung verwendeten Werkstoffes lässt sich wird dadurch erheblich vermindern und die Dauerhaltbarkeit entsprechend verbessern.

Als vorteilhaft hat es sich bewährt, wenn bei einer solchen Bauform auf den zweiten Einstellwellen 8.1 Zahnräder 8 unverdrehbar festgelegt sind, wenn die Zahnräder 8 mit einer Innenverzahnung 7 der zweiten Einstellexzenter 6 in Eingriff stehen und wenn die zweiten Einstellexzenter 6 durch die Zahnräder 8 in Umfangsrichtung verdrehbar sind. Eine solche Konstruktion zeichnet sich durch eine besonders große Robustheit und Langlebigkeit aus. Sie bedarf so gut wie keiner Wartung. Außerdem ist es von besonderem Vorteil, dass die jeweilige Stellung der Einstellexzenter 4,6 von außen erkennbar und in Bezug auf die jeweilige Stellung der beiden Einstellwellen 4.1, 8.1 unveränderlich ist. Die Einstellung exakt definierter Durchbiegungen für bestimmte Anwendungsfälle wird dadurch wesentlich vereinfacht.

Die Größe der Durchbiegung im mittleren Bereich ist allein von der Exzentriziät der Einstellexzenter abhängig und kann einfach und auf nahezu beliebig große Werte eingestellt werden. Allein die Dauerhaltbarkeit des während der bestimmungsgemäßen Verwendung rotierenden Außenmantels setzt diesen Werten Grenzen.

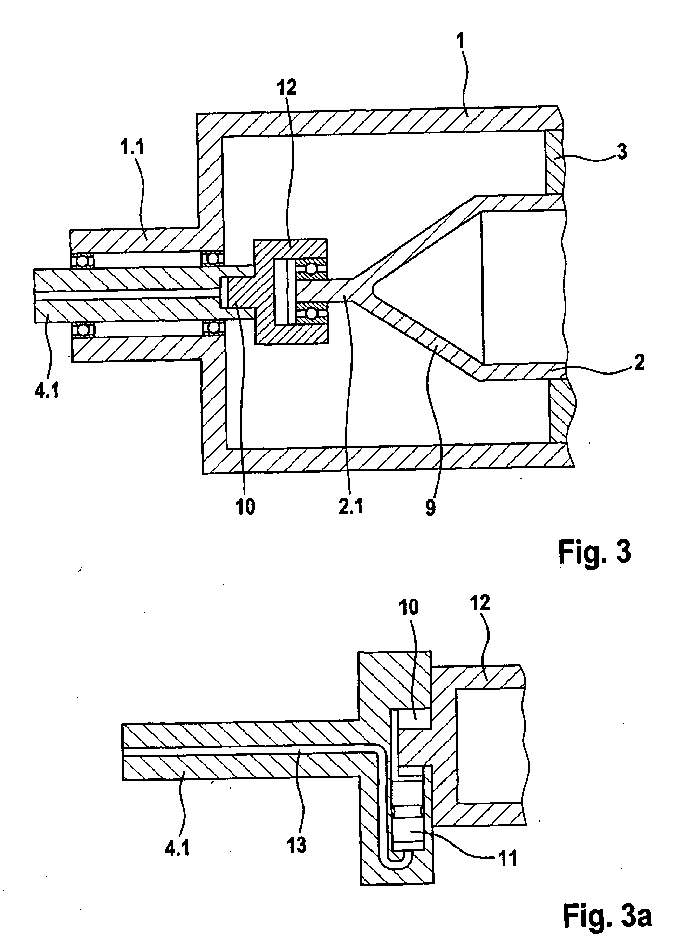

Fig. 3 und Fig. 3a zeigen eine Bauform in längs- und quergeschnittener Darstellung, bei der für eine radiale Verschiebung des Innenmantels 2 eine motorische Antriebseinheit vorgesehen ist, die von dem Außenmantel 1 umschlossen ist. Sie ist parallel zur Längsrichtung einer Führung 10 wirksam, die sich quer zur Längsachse und der Zeichungsbene der Biegewalzenanordnung erstreckt und aus einer Kolben-/Zylindereinheit 11 besteht, welche in der Einstellwelle 4.1 enthalten und mit einer hydraulischen Flüssigkeit beaufschlagbar ist. Die Lagerung 12 des Innenmantels 2 läßt sich hierdurch parallel zur Längsrichtung der Führung 10 und quer zum Außenmantel 1 verschieben. Für die Zuleitung der hydraulsichen Flüssigkeit sind Kanäle 13 vorgehen, die in der Einstellwelle 4.1 aufgenommen sind und die deren Stirnfläche mit dem Zylinder der Kolben-/Zylindereinheit verbinden. Der Kolben ist in üblicher Weise durch Topfdichtungen gegenüber der Zylinderwandung abgedichtet. Der ringförmige Abstützkörper besteht bei dieser Bauform aus vergütetem Stahl. Ein socher Werkstoff ist frei von Relaxationserscheinungen, was es erlaubt, die Exzentrizität des Außenmantels feinfühlig und dauerhaft auf sehr exakte Werte einzustellen.

## Patentansprüche

1. Biegewalzenanordnung, umfassend:
- einen Außenmantel (1) und einen Innenmantel (2), die im mittleren Bereich ihrer Längserstreckung durch mindestens einen Abstützkörper (3) in radialer Richtung aufeinander abgestützt, gemeinsam rotierbar und auf voneinander unabhängigen, stirnseitigen Lagerzapfen (1.1, 2.1) gelagert sind, und
- Mittel, die mit einer ersten Verstelleinrichtung gebildet sind, die es gestattet, die Lagerzapfen (2.1) des Innenmantels (2) relativ zu den Lagerzapfen (1.1) des Außenmantels (1) in radialer Richtung zu verschieben,
**dadurch gekennzeichnet, dass** bei der ersten Verstelleinrichtung
- an den beiden Enden des Innenmantels (2) erste Einstellexzenter (4) mit einem exzentrisch zu den Lagerzapfen (1.1) des Außenmantels (1) aufgenommenen Stützlager (5) für die Lagerzapfen (2.1) des Innenmantels (2) vorgesehen sind,
- die ersten Einstellexzenter (4) mit dem aufgenommenen Stützlager (5) von dem Außenmantel (1) radial umschlossen sind und
- die ersten Einstellexzenter (4) Bestandteile von die Lagerzapfen (1.1) des Außenmantels (1) zentrisch nach außen durchdringenden, ersten Einstellwellen (4.1) bilden, die in Umfangsrichtung verdrehbar sind.

2. Biegewalzenanordnung nach Anspruch 1, **dadurch gekennzeichnet, dass** die erste Verstelleinrichtung mechanisch und / oder motorisch verstellbar ist.

3. Biegewalzenanordnung nach Anspruch 2, **dadurch gekennzeichnet, dass** die erste Verstelleinrichtung motorisch verstellbar ist und die motorische Verstellung eine elektrisch, hydraulisch oder pneumatisch betätigbare Antriebseinheit umfasst.

4. Biegewalzenanordnung nach einem der vorangehenden Ansprüche, **dadurch gekennzeichnet, dass** zwischen den ersten Einstellexzentern (4) und den Stützlagern (5) jeweils ein in Umfangsrichtung verdrehbarer, zweiter Einstellexzenter (6) vorgesehen ist und dass die zweiten Einstellexzenter (6) durch zweite Einstellwellen (8.1) verdrehbar sind, die die ersten Einstellwellen (4.1) zentrisch nach außen durchdringen.

5. Biegewalzenanordnung nach Anspruch 4, **dadurch gekennzeichnet, dass** auf den zweiten Einstellwellen (8.1) Zahnräder (8) unverdrehbar festgelegt sind, dass die Zahnräder (8) mit einer Innenverzahnung (7) der zweiten Einstellexzenter (6) in Eingriff stehen und dass die zweiten Einstellexzenter (6) durch die Zahnräder (8) in Umfangsrichtung verdrehbar sind.

## Claims

1. Bending roll arrangement, comprising:
- an outer jacket (1) and an inner jacket (2) which are supported on each other in radial direction in a middle section of their lengths by at least one supporting body (3), are jointly rotatable and are mounted on frontal side mounting pins (1.1, 2.1) which are independent of each other, and
- means which are formed with a first adjusting device which allows to displace the mounting pins (2.1) of the inner jacket (2) relative to the mounting pins (1.1) of the outer jacket in radial direction,
**characterized in that** in the first adjustment device
- on both ends of the inner jacket (2) first adjustment extenders (4) are formed with an eccentric support bearing (5) for the support pins (2.1) of the inner jacket (2),
- the first adjustment extender (4) with the support bearing (5) is radially enclosed by the outer jacket (1), and
- the first adjustment extender (4) form parts of first adjustment waves (4.1) which percolate the mounting pins (1.1) of the outer jacket (1) outwardly and which are rotatable in circumference direction.

2. Bending roll arrangement according to claim 1, **characterized in that** the first adjustment device is mechanically and/or motor-driven adjustable.

3. Bending roll arrangement according to claim 2, **characterized in that** the first adjustment device is motor-driven adjustable and the motor-driven adjustment comprises an electrically, hydraulically or pneumatically driven drive unit.

4. Bending roll arrangement according to one of the preceding claims, **characterized in that** between the first adjustment extenders (4) and the support bearings (5) a second adjustment extender (6) is provided, respectively, which is rotatable in circumference direction and **in that** the second adjustment extender (6) is rotatable by second adjustment waves (8.1) which percolate the first adjustment wave (4.1) outwardly.

5. Bending roll arrangement according to claim 4, **characterized in that** on the second adjustment waves (8.1) gear-wheels (8) are fixed non-rotatably, **in that** the gear-wheels (8) intervene with an inner toothing (7) of the second adjustment extender (6) and **in that** the second adjustment extender (6) is rotatable by the toothing (8) in circumference direction.

## Revendications

1. Agencement de rouleaux de cintrage, comprenant :
- une enveloppe extérieure (1) et une enveloppe intérieure (2) qui sont appuyées l'une sur l'autre dans le sens radial au centre de leur étirement longitudinal par au moins un corps d'appui (3), peuvent tourner ensemble et sont disposées sur des tourillons (1.1 ; 2.1) côté avant indépendants l'un de l'autre, et
- des moyens qui sont formés avec un premier dispositif de réglage qui permet aux tourillons (2.1) de l'enveloppe intérieure (2) de se déplacer dans le sens radial par rapport aux tourillons (1.1) de l'enveloppe extérieure (1),
**caractérisé en ce que** dans le premier dispositif de réglage
- des premiers excentriques de réglage (4) avec un palier de support (5) pour les tourillons (2.1) de l'enveloppe intérieure (2) reçu de façon décentrée par rapport aux tourillons (1.1) de l'enveloppe extérieure (1) sont prévus sur les deux extrémités de l'enveloppe intérieure (2),
- les premiers excentriques de réglage (4) avec le palier de support (5) reçu sont entourés radialement par l'enveloppe extérieure (1) et
- les premiers excentriques de réglage (4) forment des composantes de premiers arbres de réglage (4.1) traversant les tourillons (1.1) de l'enveloppe extérieure (1) de façon centrée vers l'extérieur, qui peuvent être tournés dans le sens périphérique.

2. Agencement de rouleaux de cintrage selon la revendication 1, **caractérisé en ce que** le premier dispositif de réglage peut être réglé mécaniquement et/ou par moteur.

3. Agencement de rouleaux de cintrage selon la revendication 2, **caractérisé en ce que** le premier dispositif de réglage peut être réglé par moteur et que le réglage par moteur comprend une unité d'entraînement à actionnement électrique, hydraulique ou pneumatique.

4. Agencement de rouleaux de cintrage selon l'une des revendications précédentes, **caractérisé en ce qu'**un second excentrique de réglage (6) respectif pouvant tourner dans le sens périphérique est prévu entre les premiers excentriques de réglage (4) et les paliers de support (5), et que les seconds excentriques de réglage (6) peuvent être tournés par des seconds arbres de réglage (8.1) qui traversent les premiers arbres de réglage (4.1) de façon centrée vers l'extérieur.

5. Agencement de rouleaux de cintrage selon la revendication 4, **caractérisé en ce que** des roues dentées (8) sont fixées sans pouvoir tourner sur les seconds arbres de réglage (8.1), que les roues dentées (8) sont en prise avec une denture intérieure (7) des seconds excentriques de réglage (6) et que les seconds excentriques de réglage (6) peuvent être tournés dans le sens périphérique par les roues dentées (8).
